# FASCICULE DE BREVET EUROPEEN

(11) **EP 3 042 543 B1**
(45) Date de publication et mention de la délivrance du brevet: **10.01.2018**
(21) Numéro de dépôt: 14777694.2
(22) Date de dépôt: 03.09.2014
(51) Int. Cl.: H05B 6/12

(54) **DISPOSITIF DE RECUPERATION D'ENERGIE COOPERANT AVEC UN RECIPIENT DE CUISSON**
MIT EINEM KOCHBEHÄLTER INTERAGIERENDE ENERGIERÜCKGEWINNUNGSVORRICHTUNG
ENERGY RECOVERY DEVICE INTERACTING WITH A COOKING CONTAINER

(30) Priorité: 06.09.2013 FR 1358551
(43) Date de publication de la demande: 13.07.2016
(73) Titulaire: SEB S.A., 69130 Ecully (FR)
(72) Inventeur: LINGLIN, Benoît, F-74370 Saint Martin Bellevue (FR)
(74) Mandataire: Bourrières, Patrice
(86) Numéro de dépôt international: PCT/FR2014/052173
(87) Numéro de publication internationale: WO 2015/033059

(56) Documents cités:
- WO-A1-2010/080738
- WO-A1-2013/007953
- DE-A1-102010 020 189

## Description

La présente invention concerne un dispositif de récupération d'énergie destiné à coopérer avec un moyen de chauffage par induction et avec un récipient de cuisson compatible avec le moyen de chauffage par induction, le dispositif de récupération d'énergie générant de l'électricité à partir d'un flux magnétique produit par le moyen de chauffage par induction pour alimenter un dispositif électrique et/ou électromécanique agencé sur le récipient de cuisson.

L'invention concerne également un ensemble formé par un dispositif de récupération d'énergie et un récipient de cuisson.

Le document WO 2010/080738 divulgue un récipient de cuisson compatible avec un chauffage par induction et une poignée fixée au récipient. Le récipient coopère avec une base rapportée sur le fond du récipient qui est posé sur les moyens de chauffage. La base comprend une bobine faisant office d'inducteur secondaire pour récupérer de l'énergie électrique d'un inducteur primaire formé par les moyens de chauffage. La bobine est disposée entre la base et le récipient. Le récipient peut être posé sur la base pour permettre son dégagement de la base ou être collé à la base. Une plaque d'isolation thermique peut être disposée entre le fond du récipient et l'ensemble formé par la base et la bobine. L'énergie récupérée par la bobine permet d'alimenter un circuit de contrôle, un capteur de température, des moyens d'affichage et des moyens de communication prévus dans la poignée et/ou de recharger un élément de stockage (capacité ou batterie) également disposé dans la poignée. Ainsi la base, la bobine et la plaque d'isolation thermique forme un dispositif de récupération d'énergie permettant d'alimenter un dispositif électrique et/ou électromécanique agencé sur le récipient de cuisson.

Cependant, un tel dispositif de récupération d'énergie présente un agencement complexe nécessitant plusieurs éléments dont une base supportant la bobine qui est placée entre les moyens de chauffage par induction et la bobine. La présence de ces deux éléments forme un ensemble lourd à transporter. De plus, une telle base massive éloigne le récipient de cuisson du moyen de chauffage par induction et ainsi la quantité d'énergie maximum possible pouvant être transmise par le moyen de chauffage au récipient s'en trouve réduite.

Le but de la présente invention est de remédier aux inconvénients précités et de proposer un dispositif de récupération d'énergie et un récipient de cuisson qui soit de conception simple, robuste et économique à mettre en oeuvre.

Un autre but de l'invention est de proposer un dispositif de récupération d'énergie et un récipient de cuisson qui présente un fonctionnement fiable et durable dans le temps.

Ces buts sont atteints avec un dispositif de récupération d'énergie destiné à coopérer avec un moyen de chauffage par induction et avec un récipient de cuisson compatible avec le moyen de chauffage par induction et qui comporte un dispositif électrique et/ou électromécanique, le dispositif étant amovible et indépendant du récipient de cuisson, et comportant une bobine générant de l'électricité à partir d'un champ magnétique produit par le moyen de chauffage par induction lorsque que la bobine est interposée entre le moyen de chauffage et le récipient de cuisson, pour alimenter le dispositif électrique et/ou électromécanique, la bobine comprenant un élément conducteur électrique, caractérisé en ce que l'élément conducteur présente une rigidité suffisante pour assurer le maintien de la géométrie du dispositif de récupération d'énergie sans avoir recours à un moyen support additionnel.

Un tel dispositif de récupération d'énergie comporte donc peu de pièces et, ainsi, est extrêmement simple, compact et léger, facile à manipuler.

De préférence, l'élément conducteur est constitué par une lame métallique formant au moins une boucle agencée dans un plan.

Cette disposition permet de former de manière très simple et économique une bobine qui, placée dans le champ magnétique produit par le moyen de chauffage par induction, génère un courant électrique.

Avantageusement, la lame métallique présente une section sensiblement constante.

Cette disposition permet de réaliser un élément conducteur mis en forme à partir d'un élément extrudé ou filé de matière première. Ainsi, le procédé de fabrication d'une telle poignée est particulièrement économique.

De préférence, l'élément conducteur présente une section rectangulaire d'épaisseur e comprise entre 0,5 et 2 millimètres.

Cette disposition permet d'obtenir un élément conducteur présentant une bonne rigidité et suffisamment fin pour pouvoir être facilement agencé entre le moyen de chauffe par induction et le récipient de cuisson.

Avantageusement, l'élément conducteur est constitué d'un acier inoxydable.

Cette disposition permet de réaliser un bon compromis entre rigidité de l'élément conducteur et capacité à générer un courant électrique une fois l'élément conducteur placé dans le champ magnétique produit par le moyen de chauffage par induction.

De préférence, l'élément conducteur est revêtu d'un matériau isolant résistant à une température supérieure à 350°C, notamment formé soit par un dépôt de céramique, par un dépôt d'émail ou par un dépôt de polytétrafluoroéthylène (PTFE).

Cette disposition permet d'obtenir un dispositif de récupération d'énergie qui supporte les températures élevées et les agressions chimiques des agents lessiviels lors du lavage, notamment dans un lave-vaisselle.
Avantageusement l'élément conducteur comporte deux extrémités libres munies de zones de contact électrique destinées à coopérer avec deux bornes de connexion du récipient de cuisson, reliées au dispositif électrique et/ou électromécanique.
L'élément conducteur présente une section qui permet d'obtenir une bonne rigidité, en particulier au niveau des extrémités libres. Ainsi, la liaison avec un récipient de cuisson est facilitée.
De préférence, l'élément conducteur comporte deux extrémités libres munies de zones de contact électrique et une bobine primaire est agencée entre les deux zones de contact, la bobine primaire générant un champ magnétique lorsqu'un courant électrique circule dans l'élément conducteur, le champ magnétique étant destiné à coopérer avec une bobine secondaire agencée sur le récipient de cuisson pour alimenter le dispositif électrique et/ou électromécanique.
Cette disposition permet de transmettre sans contact l'énergie récupérée du dispositif de récupération vers le récipient de cuisson. Il n'est pas nécessaire d'avoir un positionnement trop précis du dispositif de récupération par rapport au récipient de cuisson pour obtenir une transmission de l'énergie récupérée.

L'invention se rapporte également à un article culinaire comportant un récipient de cuisson et un dispositif de récupération d'énergie décrit ci-dessus, le récipient de cuisson comportant deux bornes de connexion reliées au dispositif électrique et/ou électromécanique et qui coopèrent avec les zones de contact.
Ainsi, le récipient de cuisson peut être relié électriquement au dispositif de récupération d'énergie et, ainsi, permettre d'alimenter un dispositif électrique et/ou électromécanique et/ou de recharger une source d'énergie agencée dans le dispositif électrique et/ou électromécanique.

L'invention se rapporte également à un article culinaire comportant un récipient de cuisson et un dispositif de récupération d'énergie décrit ci-dessus, le récipient de cuisson comportant une bobine secondaire, reliée au dispositif électrique et/ou électromécanique, qui coopère avec le champ magnétique généré par la bobine primaire pour alimenter le dispositif électrique et/ou électromécanique.
Cette disposition permet de faciliter l'adaptation du dispositif de récupération d'énergie sur le récipient.
Avantageusement, le récipient de cuisson comporte une poignée coopérant avec le dispositif de récupération d'énergie.
Avantageusement, la poignée comporte des moyens de fixation connectables au récipient de cuisson et déconnectables de celui-ci.

Cette disposition permet d'obtenir une poignée amovible du récipient de cuisson. Avantageusement le récipient de cuisson comporte un fond comprenant un logement de réception de la bobine.

Cette disposition permet d'obtenir un positionnement de la bobine par rapport au fond du récipient de cuisson. Cette disposition permet également d'obtenir une surface du fond plane, une fois la bobine en place dans le logement de réception.

De préférence, le récipient de cuisson est une poêle, une casserole, une sauteuse, un faitout ou un autocuiseur.

L'invention sera mieux comprise à l'étude des modes de réalisation pris à titre nullement limitatif et illustrés dans les figures annexées dans lesquelles :
- La figure 1 illustre une vue en perspective d'un dispositif de récupération d'énergie selon un mode particulier de réalisation de l'invention.
- La figure 2 illustre une vue en perspective d'un dispositif de récupération d'énergie selon un autre mode de réalisation de l'invention.
- La figure 3 illustre une vue en perspective du dispositif de récupération d'énergie illustrée à la figure 2 agencé sur la calotte d'un récipient de cuisson selon un mode particulier de réalisation de l'invention.
- La figure 4 illustre une vue schématique en coupe du dispositif de récupération d'énergie de la figure 1 agencé sur la calotte du récipient de cuisson de la figure 3 et d'une poignée amovible en position désaccouplée.
- La figure 5 illustre une vue schématique en coupe du dispositif de récupération d'énergie agencé sur la calotte du récipient de cuisson de la figure 4 et de la poignée amovible en position accouplée.
- La figure 6 illustre une vue schématique en coupe du dispositif de récupération d'énergie agencé sur la calotte du récipient de cuisson de la figure 3 et d'une poignée amovible en position désaccouplée.
- La figure 7 illustre une vue schématique en coupe du dispositif de récupération d'énergie agencé sur la calotte du récipient de cuisson de la figure 6 et de la poignée amovible en position accouplée.

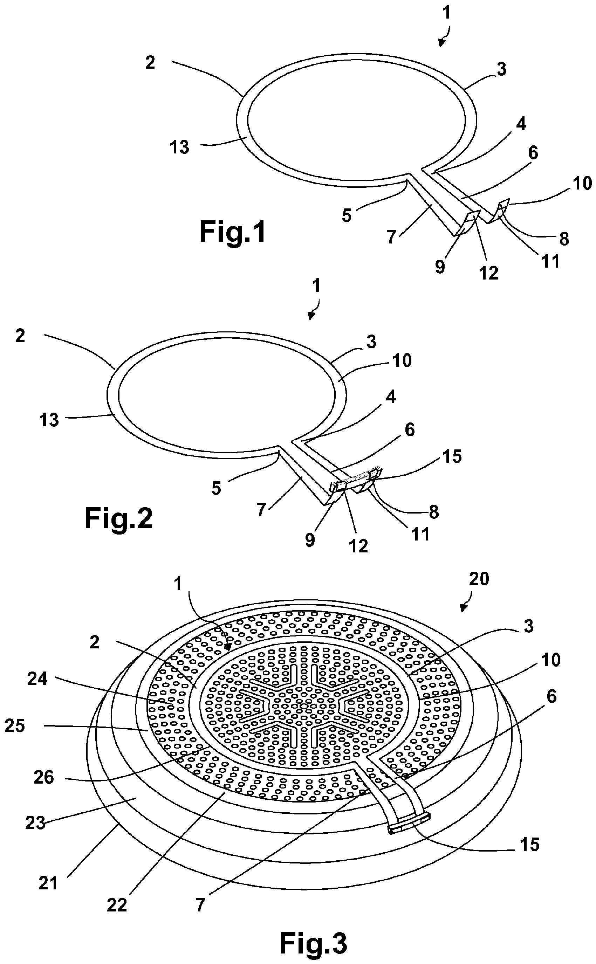

Selon un mode de réalisation visible à la figure 1, un dispositif de récupération d'énergie 1 comporte une bobine 2 comprenant une boucle 3 ouverte présentant deux extrémités 4, 5 depuis lesquelles s'étendent radialement deux portions droites 6, 7 se terminant respectivement par une portion recourbée 8, 9 vers le haut. La boucle 3 et les portions droites 6, 7 et recourbées 8, 9 sont formées par un élément conducteur 10 qui constitue la structure du dispositif de récupération d'énergie 1. L'élément conducteur 10 est constitué par une lame métallique de section rectangulaire sensiblement constante dont la largeur est comprise entre 1 et 5 millimètres et dont l'épaisseur et comprise entre 0,5 et 2 millimètres. Avantageusement, le matériau dans lequel est réalisé l'élément conducteur 10 est un acier inoxydable. Ainsi, l'élément conducteur 10 présente une rigidité suffisante pour assurer le maintien de la géométrie du dispositif de récupération d'énergie 1 sans avoir recours à un moyen support additionnel. Le matériau dans lequel est réalisé l'élément conducteur 10 pourrait être réalisé en un autre métal, notamment le cuivre. La lame métallique présente une section sensiblement constante, ce qui permet de réaliser un élément conducteur mis en forme à partir d'un élément extrudé ou filé de matière première. Cependant, d'autres process de fabrication sont possibles, notamment une découpe dans un feuillard métallique.

L'élément conducteur 10 est recouvert d'un matériau isolant 13 résistant à une température supérieure à 350°C, notamment du polytétrafluoroéthylène (PTFE), de l'émail ou de la céramique pour former une isolation électrique. Les portions recourbées 8, 9 vers le haut comportent deux extrémités libres qui ne sont pas recouvertes par le matériau isolant et qui forment deux zones de contact électrique 11, 12.

Le dispositif de récupération d'énergie 1 est destiné à coopérer avec un moyen de chauffage par induction présentant un plan de pose. La boucle 3 et les portions droites 6, 7 s'inscrivent dans un plan qui est parallèle au plan de pose lorsque le dispositif de récupération d'énergie 1 est agencé sur le moyen de chauffage.

La figure 2 illustre une variante de réalisation du dispositif de récupération d'énergie 1 qui comporte une bobine primaire 15 agencée entre les deux zones de contact électrique 11, 12. La bobine primaire 15 génère un champ magnétique lorsqu'un courant électrique circule dans l'élément conducteur 10.

La figure 3 représente un récipient de cuisson 20 comportant une calotte 21 comprenant un fond 22 et une paroi latérale 23. Le récipient de cuisson 20 comporte une plaque perforée 24 fixée sur une face externe 25 de la calotte 21. La plaque perforée 24 est réalisée en un matériau ferromagnétique, notamment un acier inoxydable, pour rendre le récipient compatible avec un moyen de chauffe par induction.

Le fond 22 comporte un logement 26 réalisé par frappe et présentant une forme adaptée à recevoir la bobine 2, en particulier la boucle 3 et les portions droites 6, 7. La bobine 2 se positionne dans le logement 26 pour que le fond 22 présente une surface plane destinée à être posée sur le plan de pose du moyen de chauffage.

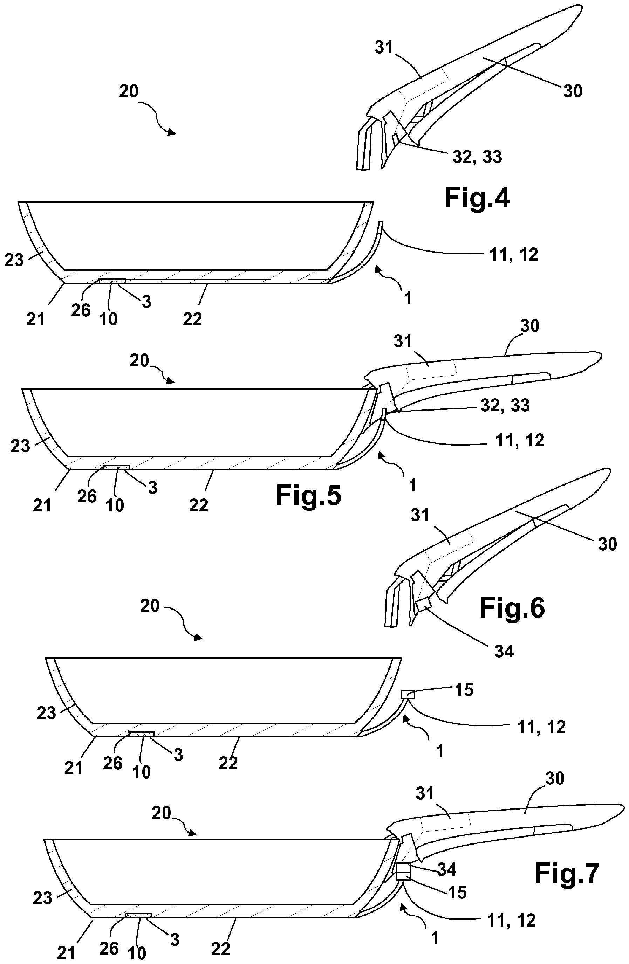

Tel que visible aux figures 4 à 7, le récipient de cuisson 20 comporte une poignée 30 amovible. Par poignée 30 amovible, on comprend que la poignée comporte des moyens de fixation connectables au récipient de cuisson et déconnectables de celui-ci. De tels moyens de fixation sont bien connus de l'homme du métier et sont décrits par exemple dans le document EP 769 263.

La poignée 30 amovible comporte un dispositif électrique ou électromécanique 31, par exemple un circuit de contrôle muni d'un capteur de température, de moyens d'affichage et/ou de moyens de communication avec le moyen de chauffage.

Dans une variante de réalisation non représentée sur les figures, le récipient de cuisson 20 peut comporter une poignée fixe dont une extrémité est fixée sur la paroi latérale par des moyens de fixation.

Conformément aux figures 4 et 5, le dispositif de récupération d'énergie 1 illustré à la figure 1 est agencé dans le logement 26 du récipient de cuisson 20. La poignée 30 amovible comporte deux bornes de connexion 32, 33 reliées électriquement au dispositif électrique ou électromécanique 31. Les deux bornes de connexion 32, 33 coopèrent avec les zones de contact 11, 12 à la manière d'une prise de courant : les bornes de connexion 32, 33 faisant office de socle femelle et les zones de contact 11, 12 faisant office de prise mâle.

Conformément aux figures 6 et 7, le dispositif de récupération d'énergie 1 illustré à la figure 2 est agencé dans le logement 26 du récipient de cuisson 20. La poignée 30 amovible comporte une bobine secondaire 34 reliée électriquement au dispositif électrique ou électromécanique 31. La bobine secondaire 34 coopère avec le champ magnétique généré par la bobine primaire 15 (Fig. 7) pour fournir un courant qui alimente ou recharge le dispositif électrique et/ou électromécanique 31.

En fonctionnement, l'utilisateur pose sur le plan de cuisson du moyen de chauffage par induction le dispositif de récupération d'énergie 1. Il positionne ensuite le logement 26 de la calotte 21 du récipient de cuisson 20 sur la boucle 3 et les portions droites 6, 7 pour assembler le dispositif de récupération d'énergie 1 dans le fond 22 de la calotte 21. Dans le mode de réalisation du dispositif de récupération d'énergie 1 illustré aux figures 1, 4 et 5, l'utilisateur saisit une poignée 30 amovible, puis dans un mouvement de translation sensiblement verticale, assemble les deux bornes de connexion 32, 33 avec les zones de contact 11, 12 et enfin il accouple la poignée 30 amovible à la calotte 21. Après avoir placé des aliments à cuire dans la calotte 21, l'utilisateur met en marche le moyen de chauffage par induction. La boucle 3 placée dans le champ magnétique généré par le moyen de chauffage par induction fournit alors un courant transmis au dispositif électrique ou électromagnétique 31 à l'aide de la connexion réalisée entre les deux zones de contact 11, 12 et les deux bornes de connexion 32, 33.

Dans le mode de réalisation du dispositif de récupération d'énergie 1 illustré aux figures 2, 6 et 7, l'utilisateur saisit une poignée 30 amovible, puis il positionne la bobine secondaire 34 sensiblement en vis-à-vis de la bobine primaire 15 et enfin il accouple la poignée 30 amovible à la calotte 21. Après avoir placé des aliments à cuire dans la calotte 21, l'utilisateur met en marche le moyen de chauffage par induction. La boucle 3, placée dans le champ magnétique généré par le moyen de chauffage par induction, fournit alors un courant à la bobine primaire 15 qui produit un champ magnétique. La bobine secondaire 34 placée dans ce champ magnétique fournit alors un courant transmis au dispositif électrique ou électromagnétique 31.

Bien entendu, l'invention n'est nullement limitée aux modes de réalisation décrits et illustrés qui n'ont été donnés qu'à titre d'exemple. Des modifications restent possibles, notamment du point de vue de la constitution des divers éléments ou par substitution d'équivalents techniques, sans sortir pour autant du domaine de protection de l'invention.

Ainsi, dans une variante de réalisation, la bobine secondaire est agencée sur un couvercle coopérant avec le récipient de cuisson, le couvercle comportant un dispositif électrique et/ou électromécanique et la bobine secondaire permettant d'alimenter le dispositif électrique et/ou électromécanique.

## Revendications

1. Dispositif de récupération d'énergie (1) destiné à coopérer avec un moyen de chauffage par induction et avec un récipient de cuisson (20) compatible avec ledit moyen de chauffage par induction et qui comporte un dispositif électrique et/ou électromécanique (31), ledit dispositif de récupération d'énergie (1) étant amovible et indépendant du récipient de cuisson (20), et comportant une bobine (2) générant de l'électricité à partir d'un champ magnétique produit par le moyen de chauffage par induction lorsque ladite bobine (2) est interposée entre le moyen de chauffage et le récipient de cuisson (20), pour alimenter le dispositif électrique et/ou électromécanique (31), ladite bobine (2) comprenant un élément conducteur électrique (10), **caractérisé en ce que** l'élément conducteur (10) présente une rigidité suffisante pour assurer le maintien de la géométrie du dispositif de récupération d'énergie (1) sans avoir recours à un moyen support additionnel.

2. Dispositif de récupération d'énergie (1) selon la revendication 1, **caractérisé en ce que** l'élément conducteur (10) est constitué par une lame métallique formant au moins une boucle (3) agencée dans un plan.

3. Dispositif de récupération d'énergie (1) selon la revendication 2, **caractérisé en ce que** la lame métallique présente une section sensiblement constante.

4. Dispositif de récupération d'énergie (1) selon la revendication 2 ou 3, **caractérisé en ce que** l'élément conducteur (10) présente une section rectangulaire d'épaisseur e comprise entre 0,5 et 2 millimètres.

5. Dispositif de récupération d'énergie (1) selon l'une quelconque des revendications précédentes, **caractérisé en ce que** l'élément conducteur (10) est constitué d'un acier inoxydable.

6. Dispositif de récupération d'énergie (1) selon l'une quelconque des revendications précédentes, caractérisé en ce l'élément conducteur (10) est revêtu d'un matériau isolant (13) résistant à une température supérieure à 350°C, notamment formé soit par un dépôt de céramique, par un dépôt d'émail ou par un dépôt de polytétrafluoroéthylène (PTFE).

7. Dispositif de récupération d'énergie (1) selon l'une quelconque des revendications précédentes, **caractérisé en ce que** l'élément conducteur (10) comporte deux extrémités libres munies de zones de contact (11, 12) électrique destinées à coopérer avec deux bornes de connexion (32, 33) du récipient de cuisson (20), reliées au dispositif électrique et/ou électromécanique (31).

8. Dispositif de récupération d'énergie (1) selon l'une quelconque des revendications 1 à 6, **caractérisé en ce que** l'élément conducteur (10) comporte deux extrémités libres munies de zones de contact (11, 12) électrique et **en ce qu'**une bobine primaire (15) est agencée entre les deux zones de contact (11, 12), ladite bobine primaire (15) générant un champ magnétique lorsqu'un courant électrique circule dans l'élément conducteur (10), ledit champ magnétique étant destiné à coopérer avec une bobine secondaire (34) agencée sur le récipient de cuisson (20) pour alimenter le dispositif électrique et/ou électromécanique (31).

9. Article culinaire comportant un récipient de cuisson (20) et un dispositif de récupération d'énergie (1) selon la revendication 7, **caractérisé en ce que** le récipient de cuisson (20) comporte deux bornes de connexion (32, 33) reliée au dispositif électrique et/ou électromécanique (31) et qui coopèrent avec les zones de contact (11, 12).

10. Article culinaire comportant un récipient de cuisson (20) et un dispositif de récupération d'énergie (1) selon la revendication 8, **caractérisé en ce que** le récipient de cuisson (20) comporte une bobine secondaire (34) reliée au dispositif électrique et/ou électromécanique (31) et qui coopère avec le champ magnétique généré par la bobine primaire (15) pour alimenter le dispositif électrique et/ou électromécanique (31).

11. Article culinaire selon la revendication 9 ou 10, **caractérisé en ce que** le récipient de cuisson (20) comporte une poignée (30) coopérant avec le dispositif de récupération d'énergie (1).

12. Article culinaire selon la revendication 11, **caractérisé en ce que** la poignée (30) comporte des moyens de fixation connectables au récipient de cuisson et déconnectables de celui-ci.

13. Article culinaire selon l'une quelconque des revendications 9 à 12, **caractérisé en ce qu'**il comporte un fond (22) comprenant un logement (26) de réception de la bobine (2).

## Patentansprüche

1. Vorrichtung zur Rückgewinnung von Energie (1), die dazu bestimmt ist, mit einem Induktionserwärmungsmittel und mit einem Kochbehälter (20), der mit dem Induktionserwärmungsmittel kompatibel ist, zusammenzuwirken, und die eine elektrische und / oder elektromechanische Vorrichtung (31) umfasst, wobei die Vorrichtung zur Rückgewinnung von Energie (1) abnehmbar und unabhängig von dem Kochgefäß (20) ist und eine Spule (2) aufweist, die Elektrizität ausgehend von einem Magnetfeld erzeugt, das durch das Induktionserwärmungsmittel erzeugt wird, wenn die Spule (2) zwischen den Heizmitteln und dem Kochgefäß (20) angeordnet ist, um die elektrische und / oder elektromechanische Vorrichtung (31) zu versorgen, wobei die Spule (2) ein elektrisches, leitendes Element (10) aufweist, **dadurch gekennzeichnet, dass** das leitende Element (10) eine ausreichende Steifigkeit aufweist, um die Beibehaltung der Geometrie der Vorrichtung zur Rückgewinnung von Energie (1) ohne Verwendung von einem zusätzlichen Stützmittel sicherzustellen.

2. Vorrichtung zur Rückgewinnung von Energie (1) nach Anspruch 1, **dadurch gekennzeichnet, dass** das leitende Element (10) aus einem metallischen Streifen besteht, der mindestens eine Schleife (3) bildet, die in einer Ebene angeordnet ist.

3. Vorrichtung zur Rückgewinnung von Energie (1) nach Anspruch 2, **dadurch gekennzeichnet, dass** der metallische Streifen einen im Wesentlichen konstanten Querschnitt aufweist.

4. Vorrichtung zur Rückgewinnung von Energie (1) nach Anspruch 2 oder 3, **dadurch gekennzeichnet, dass** das leitende Element (10) einen rechteckigen Querschnitt mit einer Dicke e zwischen 0,5 und 2 Millimetern aufweist.

5. Vorrichtung zur Rückgewinnung von Energie (1) nach einem der vorhergehenden Ansprüche, **dadurch gekennzeichnet, dass** das leitfähige Element (10) aus einem rostfreien Stahl besteht.

6. Vorrichtung zur Rückgewinnung von Energie (1) nach einem der vorhergehenden Ansprüche, **dadurch gekennzeichnet, dass** das leitende Element (10) mit einem isolierenden Material (13), das widerstandsfähig gegen Temperaturen von über 350 °C ist, beschichtet ist, das insbesondere durch eine Abscheidung von Keramik oder durch eine Abscheidung von Emaille oder durch eine Abscheidung von Polytetrafluorethylen (PTFE) gebildet ist.

7. Vorrichtung zur Rückgewinnung von Energie (1) nach einem der vorhergehenden Ansprüche, **dadurch gekennzeichnet, dass** das leitende Element (10) zwei freie Enden aufweist, die mit Kontaktbereichen (11, 12) versehen sind, die dazu bestimmt sind, mit zwei elektrischen Anschlussklemmen (32, 33) des Kochgefäßes (20) zusammenzuwirken, die mit der elektrischen und / oder elektromechanischen Vorrichtung (31) verbunden sind.

8. Vorrichtung zur Rückgewinnung von Energie (1) nach einem der Ansprüche 1 bis 6, **dadurch gekennzeichnet, dass** das leitende Element (10) zwei freie Enden aufweist, die mit elektrischen Kontaktbereichen (11, 12) versehen sind, und dass eine elektrische Primärspule (15) zwischen den beiden Kontaktbereichen (11, 12) angeordnet ist, wobei die Primärspule (15) ein Magnetfeld erzeugt, wenn ein elektrischer Strom in dem leitenden Element (10) fließt, wobei das magnetische Feld dazu bestimmt ist, mit einer Sekundärspule (34), die auf dem Kochgefäß (20) angeordnet ist, zusammenzuwirken, um die elektrische und / oder elektromechanische Vorrichtung (31) zu versorgen.

9. Kochartikel, der ein Kochgefäß (20) und eine Vorrichtung zur Rückgewinnung von Energie (1) nach Anspruch 7 aufweist, **dadurch gekennzeichnet, dass** das Kochgefäß (20) zwei Anschlussklemmen (32, 33) aufweist, die mit der elektrischen und / oder elektromechanischen Vorrichtung (31) verbunden sind, und die mit den Kontaktbereichen (11, 12) zusammenwirken.

10. Kochartikel, der ein Kochgefäß (20) und eine Vorrichtung zur Rückgewinnung von Energie (1) nach Anspruch 8 aufweist, **dadurch gekennzeichnet, dass** das Kochgefäß (20) eine Sekundärspule (34) aufweist, die mit der elektrischen und / oder elektromechanischen Vorrichtung (31) verbunden ist, und die mit dem magnetischen Feld zusammenwirkt, das durch die Primärspule (15) erzeugt wird, um die elektrische und / oder elektromechanische Vorrichtung (31) zu versorgen.

11. Kochartikel nach Anspruch 9 oder 10, **dadurch gekennzeichnet, dass** das Kochgefäß (20) einen Handgriff (30) aufweist, der mit der Vorrichtung zur Rückgewinnung von Energie (1) zusammenwirkt.

12. Kochartikel nach Anspruch 11, **dadurch gekennzeichnet, dass** der Handgriff (30) Befestigungsmittel umfasst, die mit dem Kochgefäß verbindbar und von diesem lösbar sind.

13. Kochartikel nach einem der Ansprüche 9 bis 12, **dadurch gekennzeichnet, dass** er eine Basis (22) aufweist, die ein Gehäuse (26) zur Aufnahme der Spule (2) umfasst.

## Claims

1. Device (1) for recovering energy, intended to cooperate with a means for heating via induction and with a cooking container (20) compatible with said means for heating via induction and which comprises an electric and/or electromechanical device (31), said device (1) for recovering energy being removable from and independent of the cooking container (20), and comprising a coil (2) generating electricity from a magnetic field produced by the means for heating via induction when said coil (2) is interposed between the heating means and the cooking container (20), in order to power the electric and/or electromechanical device (31), said coil (2) comprising an electrically conductive element (10), **characterised in that** the conductive element (10) has sufficient rigidity to maintain the geometry of the device (1) for recovering energy without having to use an additional supporting means.

2. Device (1) for recovering energy according to claim 1, **characterised in that** the conductive element (10) consists of a metal strip forming at least one loop (3) arranged in a plane.

3. Device (1) for recovering energy according to claim 2, **characterised in that** the metal strip has a substantially constant cross-section.

4. Device (1) for recovering energy according to claim 2 or 3, **characterised in that** the conductive element (10) has a rectangular cross-section having a thickness e between 0.5 and 2 millimetres.

5. Device (1) for recovering energy according to any one of the previous claims, **characterised in that** the conductive element (10) consists of a stainless steel.

6. Device (1) for recovering energy according to any one of the previous claims, **characterised in that** the conductive element (10) is coated with an insulating material (13) that can resist a temperature of more than 350°C, in particular formed either by a deposit of ceramic, by a deposit of enamel or by a deposit of polytetrafluoroethylene (PTFE).

7. Device (1) for recovering energy according to any one of the previous claims, **characterised in that** the conductive element (10) comprises two free ends provided with electric contact zones (11, 12) intended to cooperate with two connection terminals (32, 33) of the cooking container (20) connected to the electric and/or electromechanical device (31).

8. Device (1) for recovering energy according to any one of claims 1 to 6, **characterised in that** the conductive element (10) comprises two free ends provided with electric contact zones (11, 12) and **in that** a primary coil (15) is arranged between the two contact zones (11, 12), said primary coil (15) generating a magnetic field when an electric current circulates in the conductive element (10), said magnetic field being intended to cooperate with a secondary coil (34) arranged on the cooking container (20) in order to power the electric and/or electromechanical device (31).

9. Cooking item comprising a cooking container (20) and a device (1) for recovering energy according to claim 7, **characterised in that** the cooking container (20) comprises two connection terminals (32, 33) connected to the electric and/or electromechanical device (31) and which cooperate with the contact zones (11, 12).

10. Cooking item comprising a cooking container (20) and a device (1) for recovering energy according to claim 8, **characterised in that** the cooking container (20) comprises a secondary coil (34) that is connected to the electric and/or electromechanical device (31) and cooperates with the magnetic field generated by the primary coil (15) in order to power the electric and/or electromechanical device (31).

11. Cooking item according to claim 9 or 10, **characterised in that** the cooking container (20) comprises a handle (30) cooperating with the device (1) for recovering energy.

12. Cooking item according to claim 11, **characterised in that** the handle (30) comprises attachment means that can be connected to and disconnected from the cooking container.

13. Cooking item according to any one of claims 9 to 12, **characterised in that** it comprises a bottom (22) comprising a housing (26) for receiving the coil (2).
